# EUROPÄISCHE PATENTSCHRIFT

(11) **EP 1 228 115 B1**
(45) Veröffentlichungstag und Bekanntmachung des Hinweises auf die Patenterteilung: **31.05.2006**
(21) Anmeldenummer: 00966098.6
(22) Anmeldetag: 02.10.2000
(51) Int. Cl.: C08G 18/67, C09D 175/16, C08G 18/73

(54) **POLYMERISIERBARE OLEFINISCH UNGESÄTTIGTE DOPPELBINDUNGEN ENTHALTENDE FESTE ALIPHATISCHE POLYURETHANE AUF DER BASIS LINEARER DIISOCYANATE UND IHRE VERWENDUNG**
POLYMERIZABLE SOLID ALIPHATIC POLYURETHANES WHICH CONTAIN OLEFINICALLY UNSATURATED DOUBLE BONDS AND WHICH ARE BASED ON LINEAR DIISOCYANATES, AND THEIR USE
POLYURETHANES ALIPHATIQUES SOLIDES CONTENANT DES LIAISONS DOUBLES POLYMERISABLES INSATUREES PAR OLEFINES, A BASE DE DI-ISOCYANATES LINEAIRES ET LEUR UTILISATION

(30) Priorität: 02.10.1999 DE 19947522
(43) Veröffentlichungstag der Anmeldung: 07.08.2002
(73) Patentinhaber: BASF Aktiengesellschaft, 67056 Ludwigshafen (DE)
(72) Erfinder: BRUCHMANN, Bernd, 67251 Freinsheim (DE); SCHWALM, Reinhold, 67157 Wachenheim (DE); PAULUS, Wolfgang, 55270 Ober-Olm (DE); BLUM, Rainer, 67069 Ludwigshafen (DE)
(74) Vertreter: Fitzner, Uwe
(86) Internationale Anmeldenummer: PCT/EP2000/009627
(87) Internationale Veröffentlichungsnummer: WO 2001/025306

(56) Entgegenhaltungen:
- EP-A- 0 410 242
- EP-A- 0 924 234
- WO-A-99/14254
- GB-A- 2 290 793

## Beschreibung

Die vorliegende Erfindung betrifft neue polymerisierbare olefinisch ungesättigte Doppelbindungen enthaltende feste aliphatische Polyurethane auf der Basis linearer Diisocyanate. Außerdem betrifft die vorliegende Erfindung die Verwendung der neuen aliphatischen Polyurethane als neue Pulverlacke oder zur Herstellung von neuen Pulverlacken. Nicht zuletzt betrifft die vorliegende Erfindung die Verwendung der neuen Pulverlacke zur Herstellung von Beschichtungen auf grundierten oder ungrundierten Substraten.

Aus der deutschen Patentanmeldung DE-A-24 36 186 ist ein Polyurethan bekannt, das aus Toluylendiisocyanat, einem aromatischen, nicht linearen Diisocyanat, 2-Hydroxyethylmethacrylat und Trimethylolpropan im molaren Verhältnis von 3 : 3 : 1 hergestellt wird. Das Polyurethan weist einen Schmelzpunkt von etwa 65°C und einen Gehalt an polymerisierbaren Doppelbindungen von 2,9 Doppelbindungen pro 1.000 Molekulargewicht auf. Es kann als solches als ein mit aktinischer Strahlung härtbarer Pulverlack verwendet werden. Bedingt durch seinen Gehalt an aromatischen Strukturen sind die hieraus hergestellten Beschichtungen nicht witterungsstabil, sondern neigen unter dem Einfluß von Sonnenlicht zur Vergilbung.

Aus der europäischen Patentanmeldung EP-A-0 410 242 sind Polyurethane bekannt, die (Meth)acryloylgruppen in einer Menge, entsprechend 3 bis 10 Gew.-%, bezogen auf das Polyurethan, an =C=C= (Molekulargewicht 24), enthalten. Diese bekannten Polyurethane weisen nicht näher spezifizierte Schmelzpunkte oder Schmelzintervalle im Temperaturbereich von 50 bis 180°C auf. Für ihre Herstellung werden Isophorondiisocyanat, 4,4'-Diisocyanatodicyclohexylmethan, 4,4'-Diisocyanatodiphenylmethan, dessen technische Gemische mit 2,4-Diisocyanatodiphenylmethan und gegebenenfalls den höheren Homologen dieser Diisocyanate, 2,4-Diisocyanatotoluol und dessen technische Gemische mit 2,6-Diisocyanatotoluol (Toluylendiisocyanat) sowie Biuret-, Isocyanurat- oder Urethan-modifizierte Polyisocyanate auf Basis dieser einfachen Polyisocyanate verwendet. Hinsichtlich der Polyurethane auf der Basis aromatischer Polyisocyanate gilt das vorstehend Gesagte. Ansonsten ist es schwierig, auf der Basis dieser Polyisocyanate Polyurethane herzustellen, die ein besonders enges Schmelzintervall oder gar einen definierten Schmelzpunkt aufweisen. Insbesondere führt die Verwendung von Polyisocyanaten mit einer mittleren Funktionalität >2 zu Polyurethanen einer unerwünscht breiten Molekulargewichtsverteilung, so daß sie in Einkomponenten-Pulverlacken nur bedingt verwendbar sind.

Die WO 99/14254 A1 beschreibt ein Pulverlack enthaltend ein Vernetzungsmittel auf Basis eines Polyurethans mit funktionalisierten Vinylgruppen. Eine genaue Angabe zu den eingesetzten Mengenverhältnissen der Edukte wird nicht gegeben. Ferner wird die Problematik von Polyurethanen mit einem engen Schmerzintervall nicht angesprochen.

Aufgabe der vorliegenden Erfindung ist es, neue polymerisierbare olefinisch ungesättigte Doppelbindungen enthaltende feste Polyurethane zu finden, die die Nachteile des Standes der Technik nicht mehr länger aufweisen, sondern im Temperaturbereich von 40 bis 200°C ein sehr enges Schmelzintervall besitzen und als Pulverlacke oder zur Herstellung von Pulverlacken verwendet werden können, die witterungsstabile und nicht vergilbende Beschichtungen liefern.

Demgemäß wurde das neue polymerisierbare olefinisch ungesättigte Doppelbindungen enthaltende feste aliphatische Polyurethan mit einem sehr engen Schmelzintervall von 0,5 bis 10°C im Temperaturbereich von 40 bis 200°C gefunden, das aus
herstellbar
indem man
(a1) mindestens ein Diisocyanat A) mit mindestens einer Verbindung C) im Molverhältnis A) : C) = 1 : 1 zu einem eine Isocyanatgruppe und eine olefinisch ungesättigte Gruppe enthaltenden Addukt A/C) umsetzt, wonach man
(a2) das Adduktes A/C) mit mindestens einer Verbindung B) in einem Molverhältnis A/C) : B) = x : 1, worin x die Anzahl der isocyanatreaktiven Gruppen in der mindestens einen Verbindung B) bedeutet, zu dem aliphatischen Polyurethan umsetzt,
oder
indem man
(b1) mindestens ein Diisocyanat A) mit mindestens einer Verbindung B) in einem Molverhältnis A) : B) = x : 1, worin x die Anzahl der isocyanatreaktiven Gruppen in der mindestens einen Verbindung B) bedeutet, zu dem Addukt A/B) mit x Isocyanatgruppen umsetzt, wonach man
(b2) das Addukt A/B) mit mindestens einer Verbindung C) in einem Molverhältnis C) : A/B) = x : 1,worin x die Anzahl der Isocyanatgruppen in dem Addukt A/B) bedeutet, zu dem aliphatischen Polyurethan umsetzt.

A) mindestens einem linearen aliphatischen Diisocyanat,
B) mindestens einer aliphatischen Verbindung mit mindestens zwei isocyanatreaktiven funktionellen Gruppen und/oder Wasser und
C) mindestens einer olefinisch ungesättigten Verbindung mit einer isocyanatreaktiven funktionellen Gruppe
herstellbar ist.

Im folgenden wird das neue polymerisierbare olefinisch ungesättigte Doppelbindungen enthaltende feste aliphatische Polyurethan als "erfindungsgemäßes Polyurethan" bezeichnet.

Außerdem wurde der neue thermisch und/oder mit aktinischer Strahlung härtbare Pulverlack gefunden, der mindestens ein erfindungsgemäßes Polyurethan enthält oder hieraus besteht und der im folgenden als "erfindungsgemäßer Pulverlack" bezeichnet wird.

Des weiteren wurden neue Beschichtungen für grundierte oder ungrundierte Substrate gefunden, die aus dem erfindungsgemäßen Pulverlack hergestellt werden und die im folgenden als "erfindungsgemäße Beschichtungen" bezeichnet werden.

Nicht zuletzt wurden grundierte oder ungrundierte Substrate gefunden, die mindestens eine erfindungsgemäße Beschichtung aufweisen und im folgenden als "erfindungsgemäße Substrate" bezeichnet werden.

Weitere erfindungsgemäße Gegenstände gehen aus der nachfolgenden Beschreibung hervor.

Im Hinblick auf den Stand der Technik war es überraschend und für den Fachmann nicht vorhersehbar, daß die Aufgabe, die der vorliegenden Erfindung zugrunde liegt, mit Hilfe der erfindungsgemäßen Polyurethane gelöst werden konnte. Insbesondere überraschte, daß die erfindungsgemäßen Polyurethane sehr enge Schmelzintervalle oder sogar scharfe Schmelzpunkte aufweisen und daher für die Herstellung von Pulverlacken besonders gut geeignet sind. Des weiteren überraschte, daß die erfindungsgemäßen Pulverlacke in einfacher Weise hergestellt, appliziert und gehärtet werden können und daß die hiermit hergestellten erfindungsgemäßen Beschichtungen nicht nur witterungsstabil und vergilbungsfrei sind, sondern auch einen hervorragenden Verlauf und hervorragende optische Eigenschaften aufweisen.

Das erfindungsgemäße Polyurethan weist in dem Temperaturbereich von 40 bis 200°C, insbesondere 60 bis 185°C ein sehr enge Schmelzintervall auf. Im Rahmen der vorliegenden Erfindung ist unter einem Schmelzintervall ein Temperaturbereich zu verstehen, bei dessen niedrigster Temperatur das erfindungsgemäße Polyurethan zu schmelzen beginnt und bei dessen höchster Temperatur das erfindungsgemäße Polyurethan ganz geschmolzen ist. Vorzugsweise hat dieses Schmelzintervall eine Breite von 0,5 bis 10°C, insbesondere 1 bis 6°C. Besonders vorteilhafte erfindungsgemäße Polyurethane weisen einen scharfen Schmelzpunkt auf, der in dem vorstehend angegebenen Temperaturbereich liegt.

Das erfindungsgemäße Polyurethan enthält terminale und/oder laterale olefinisch ungesättigte Doppelbindungen. Hierbei sind terminale olefinisch ungesättigte Doppelbindungen von Vorteil und werden deshalb bevorzugt verwendet.

Die olefinisch ungesättigten Doppelbindungen können in den unterschiedlichsten organischen Gruppen vorliegen. Wesentlich ist, daß die olefinisch ungesättigten Doppelbindungen so reaktiv sind, daß sie polymerisierbar sind. Beispiele geeigneter organischer Gruppen, die olefinisch ungesättigte Doppelbindungen enthalten, sind(Meth)acrylat-, Vinylether-, Vinylester-, Allyl-, Allylether- und/oder Allylestergruppen, bevorzugt Methacrylat- und/oder Acrylatgruppen. Von diesen bieten die Acrylatgruppen besondere Vorteil und werden deshalb besonders bevorzugt verwendet.

Das erfindungsgemäße Polyurethan ist herstellbar aus mindestens einem linearen aliphatischen Diisocyanat A). Gut geeignete erfindungsgemäß zu verwendende lineare aliphatische Diisocyanate A) weisen eine unverzweigte lineare Kohlenstoffkette mit 2 bis 20 Kohlenstoffatomen, insbesondere mit einer geradzahligen Anzahl von Kohlenstoffatomen, einen cycloaliphatischen Ring mit einer geradzahligen Anzahl von Kohlenstoffatomen oder eine unverzweigte lineare Kohlenstoffkette mit 2 bis 20 Kohlenstoffatomen, die mindestens einen cycloaliphatischen Ring mit einer geradzahligen Anzahl von Kohlenstoffatomen enthält, auf. Hierbei befindet sich an jedem Ende der Kohlenstoffkette oder an den beiden Kohlenstoffatomen des cycloaliphatischen Rings, die in Parastellung einander gegenüberstehen, eine Isocyanatgruppe.

Beispiele geeigneter unverzweigter linearer Kohlenstoffketten leiten sich ab von den Alkanen Ethan, Propan, Butan, Pentan, Hexan, Heptan, Octan, Nonan, Decan, Undecan, Dodecan, Tridecan, Tetradecan, Pentadecan, Hexadecan, Heptadecan, Octadecan, Nonadecan und Eicosan, insbesondere Butan, Hexan, Octan, Decan, Dodecan und Tetradecan.

Beispiele geeigneter cycloaliphatischer Ringe leiten sich ab von den Cycloalkanen Cyclobutan, Cyclohexan und Cyclooctan, insbesondere Cyclohexan.

Beispiele geeigneter unverzweigter linearer Kohlenstoffketten, die mindestens einen geradzahligen cycloaliphatischen Ring enthalten, leiten sich ab von den alkylsubstituierten Cycloalkanen 1,3-Dimethylcyclobutan, 1,4-Dimethylcyclohexan, 1-Methyl-4-ethylcyclohexan, 1,4-Diethylcyclohexan, 1,4-Dipropylcyclohexan, 1-Ethyl-4-propylcyclohexan, 1,4-Di-n-butylcyclohexan, 1,5-Dimethylcyclooctan und 1,5-Diethylcyclooctan, insbesondere 1,4-Dimethylcyclohexan.

Beispiele besonders gut geeigneter Diisocyanate A) sind Tetramethylendiisocyanat-(1,4), Hexamethylendiisocyanat-(1,6), Octan-1,8-diyl-diisocyanat, Decan-1,10-diyl-diisocyanat, Dodecan-1,12-diyl-diisocyanat, Tetradecan-1,14-diyl-diisocyanat, Cyclohexan-1,4-diyl-diisocyanat oder 1,4-Bis(isocyanatomethyl)cyclohexan.

Weitere Beispiele besonders gut geeigneter Diisocyanate A) sind lineare oligomere oder polymere Diisocyanate A), die erhältlich sind durch die Umsetzung mindestens eines der vorstehend beschriebenen monomeren Diisocyanate A) mit mindestens einer der nachstehend beschriebenen, mindestens zwei isocyanatreaktive funktionelle Gruppen enthaltenden Verbindung B). Hierbei werden die molaren Verhältnisse bekanntermaßen derart gewählt, daß mit Isocyanatgruppen terminierte Urethanpräpolymere resultieren.

Im Rahmen der vorliegenden Erfindung werden unter oligomeren Diisocyanaten A) Urethanpräpolymere verstanden, die mindestens 2 bis 15 wiederkehrende Monomereinheiten in ihrem Molekül enthalten. Im Rahmen der vorliegenden Erfindung werden unter polymeren Diisocyanaten A) Urethanpräpolymere verstanden, die mindestens 10 wiederkehrende Monomereinheiten in ihrem Molekül enthalten. Ergänzend wird zu diesen Begriffen auf Römpp Lexikon Lacke und Druckfarben, Georg Thieme Verlag, Stuttgart, New York, 1998, »Oligomere«, Seite 425, verwiesen.

Das weitere wesentliche Ausgangsprodukt für die Herstellung der erfindungsgemäßen Polyurethane ist mindestens eine aliphatische Verbindung B) mit mindestens zwei isocyanatreaktiven funktionellen Gruppen.

Anstelle dieser Verbindung B) oder zusätzlich zu diesen kann auch Wasser verwendet werden, welches bekanntermaßen mit zwei Isocyanatgruppen unter Abspaltung von Kohlendioxid zu einer Harnstoffgruppe reagiert.

Die Verbindung B) ist linear oder verzweigt.

Die aliphatische Verbindung B) enthält zwei, drei oder vier isocyanatreaktive funktionelle Gruppen. In ganz speziellen Fällen können auch mehr als vier, beispielsweise fünf oder sechs isocyanatreaktive funktionelle Gruppen angewandt werden. Erfindungsgemäß ist es von Vorteil zwei oder drei, insbesondere aber zwei, dieser funktionellen Gruppen anzuwenden.

Beispiele geeigneter isocyanatreaktiver funktioneller Gruppen sind Aminogruppen, Thiolgruppen und Hydroxylgruppen. Die Verbindung B) enthält hierbei entweder Aminogruppen, Thiolgruppen oder Hydroxylgruppen oder Kombinationen dieser Gruppen, beispielsweise Aminogruppen und Thiolgruppen, Aminogruppen und Hydroxylgruppen, Thiolgruppen und Hydroxylgruppen oder Aminogruppen, Thiolgruppen und Hydroxylgruppen. Erfindungsgemäß ist es von Vorteil, Aminogruppen und/oder Hydroxylgruppen, insbesondere aber Hydroxylgruppen, zu verwenden.

Demnach handelt es sich bei den bevorzugten Verbindungen B) um lineare oder verzweigte Diamine, Triamine, Aminoalkohole mit zwei Aminogruppen und einer Hydroxylgruppe, mit einer Aminogruppe und zwei Hydroxylgruppen, mit einer tertiären Aminogruppe und drei Hydroxylgruppen oder mit einer Aminogruppe und einer Hydroxylgruppe oder Diole, Triole, Tetrole oder Zuckeralkohole, insbesondere solche mit einem Molekulargewicht von 62 bis 200 Dalton.

Beispiele geeigneter Diamine B) sind Ethylendiamin, Trimethylendiamin, Tetramethylendiamin oder Hexamethylendiamin.

Beispiele geeigneter Triamine B) sind Diethylentriamin oder Ethylenpropylentriamin.

Die Diamine und Triamine B) werden vorzugsweise nicht als die alleinigen Verbindungen B) verwendet, sondern in Kombination mit den Aminoalkoholen und Polyolen B).

Beispiele geeigneter Aminoalkohole B) mit zwei Aminogruppen und einer Hydroxylgruppe sind 2-Hydroxytrimethylendiamin oder 2-Hydroxytetramethylendiamin.

Beispiele geeigneter Aminoalkohole B) mit einer Aminogruppe und zwei Hydroxylgruppen sind Diethanolamin oder Dipropanolamin.

Beispiele geeigneter Aminoalkohole B) mit einer tertiären Aminogruppe und drei Hydroxylgruppen sind Triethanolamin oder Tripropanolamin.

Beispiele geeigneter Aminoalkohole B) mit einer Aminogruppe und einer Hydroxylgruppe sind Ethanolamin oder Propanolamin.

Beispiele geeigneter unverzweigter Diole B) sind niedermolekulare Diole wie Ethylengylkol, Propylenglykol, 1,3-Propandiol, Butylenglykol, 1,5-Pentandiol, 1,6-Hexandiol, 1,4-Cyclohexandiol, 1,4-Cyclohexandimethanol, Diethylenglykol, Dipropylenglykol oder Dibutylenglykol.

Beispiel geeigneter oligomerer oder polymerer Diole B) sind Triethylenglykol, Polyethylenglykol, Polyproylenglykol, Poly(co-ethylen-co-propylenglykol) oder Tetrahydrofuran eines zahlenmittleren Molekulargewichts von mehr als 500 Dalton, insbesondere solche mit einer engen Molekulargewichtsverteilung, die auch als Polyetherdiole bezeichnet werden.

Weitere Beispiele geeigneter oligomerer oder polymerer Diole B) sind lineare aliphatische Polyesterpolyole.

Bekanntermaßen sind lineare aliphatische Polyesterpolyole B) erhältlich durch Umsetzung von linearen aliphatischen Dicarbonsäuren sowie gegebenenfalls Tri- oder Tetracarbonsäuren und Monocarbonsäuren in untergeordneten Mengen oder der veresterungsfähigen Derivate dieser Carbonsäuren, wie die Anhydride - sofern existent - oder die Methyl-, Ethyl-, Propyl- oder Butylester, mit Diolen. Im Rahmen der vorliegenden Erfindung sind unter untergeordneten Mengen Mengen zu verstehen, die einerseits kein Gelieren der Polyester (Tri- oder Tetracarbonsäuren) bewirken und andererseits die Polykondensation nicht zu früh abbrechen (Monocarbonsäuren).

Beispiele geeigneter linearer aliphatischer Dicarbonsäuren sind 1,3-Cyclobutandicarbonsäure, 1,4-Cyclohexandicarbonsäure, Malonsäure, Bernsteinsäure, Glutarsäure, Adipinsäure, Pimelinsäure, Korksäure, Azelainsäure, Sebacinsäure, Undecandicarbonsäure oder Dodecandicarbonsäure.

Beispiele geeigneter Tricarbonsäuren oder Tetracarbonsäuren sind 1,2,4-Cyclohexantricarbonsäure oder 1,2,4,5-Cyclohexantetracarbonsäure.

Beispiele geeigneter Monocarbonsäuren sind Capronsäure, Caprylsäure, Caprinsäure, Laurinsäure, Palmitinsäure oder Stearinsäure.

Beispiele geeigneter linearer aliphatischer Diole für die Herstellung der linearen Polyesterdiole B) sind die vorstehend beschriebenen Diole B).

Beispiele geeigneter verzweigter aliphatischer Diole für die Herstellung der linearen Polyesterdiole B) sind Neopentylglykol, die stellungsisomeren Diethyloctandiole oder Diole der Formel I oder II: 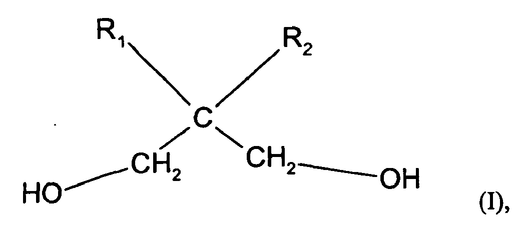 in der R¹ und R² jeweils einen gleichen oder verschiedenen Rest darstellen und für einen Alkylrest mit 1 bis 18 C-Atomen oder einen cycloaliphatischen Rest stehen, mit der Maßgabe, daß R¹ und/oder R² nicht Methyl sein darf; 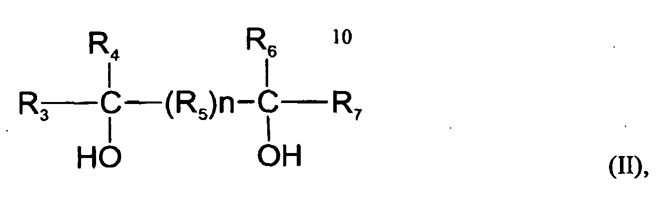 in der R³, R⁴, R⁶ und R⁷ jeweils gleiche oder verschiedene Reste darstellen und für einen Alkylrest mit 1 bis 6 C-Atomen oder einen Cycloalkylrest stehen und R⁵ einen Alkylrest mit 1 bis 6 C-Atomen, einen Arylrest oder einen ungesättigten Alkylrest mit 1 bis 6 C-Atomen darstellt, und n entweder 0 oder 1 ist.

Als Diole I der allgemeinen Formel I sind alle Propandiole der Formel geeignet, bei denen entweder R¹ oder R² oder R¹ und R² nicht gleich Methyl ist, wie beispielsweise 2-Butyl-2-ethylpropandiol-1,3, 2-Butyl-2-methylpropandiol-1,3, 2-Propyl-2-ethylpropandiol-1,3, 2-Di-tert.-butylpropandiol-1,3, 2-Butyl-2-propylpropandiol-1,3, 1-Dihydroxymethyl-bicyclo[2.2.1]heptan, 2,2-Diethylpro-pandiol-1,3, 2,2-Dipropylpropandiol-1,3 oder 2-Cyclohexyl-2-methylpropandiol-1,3.

Als Diole II der allgemeinen Formel II können beispielsweise 2,5-Dimethylhexandiol-2,5, 2,5-Diethylhexandiol-2,5, 2-Ethyl-5-methylhexandiol-2,5 oder 2,4-Dimethylpentandiol-2,4 eingesetzt werden.

Die verzweigten aliphatischen Diole können auch als solche als Diole B) verwendet werden. In beiden Anwendungszwecken werden sie vorteilhafterweise nicht als die alleinigen Diole, sondern im Gemisch mit linearen aliphatischen Verbindungen B) verwendet. Bevorzugt liegen dann letztere im Überschuß, d. h. zu mehr als 50 Mol-% in dem Gemisch aus Verbindungen B) vor.

Die Herstellung der linearen aliphatischen Polyesterdiole B) weist keine methodischen Besonderheiten auf, sondern erfolgt nach den üblichen und bekannten Methoden der Polyesterchemie vorzugsweise in Gegenwart geringer Mengen eines geeigneten Lösemittels als Schleppmittel. Als Schleppmittel werden z. B. aromatische Kohlenwasserstoffe, wie insbesondere Xylol und (cyclo)aliphatische Kohlenwasserstoffe, z. B. Cyclohexan oder Methylcyclohexan, eingesetzt.

Weitere Beispiele geeigneter oligomere oder polymerer linearer aliphatischer Polyesterdiole B) sind Polyesterdiole, die durch Umsetzung eines Lactons mit einem Diol erhalten werden. Sie zeichnen sich durch die Gegenwart von entständigen Hydroxylgruppen und wiederkehrenden Polyesteranteilen der Formel - (-CO-(CHR⁸)ₘ- CH₂-O-)- aus. Hierbei ist der Index m bevorzugt 4 bis 6 und der Substitutent R⁸ = Wasserstoff oder ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole B) dieser Art wird das unsubstituierte -Caprolacton, bei dem m den Wert 4 hat und alle R⁸-Substituenten Wasserstoff sind, bevorzugt. Die Umsetzung mit Lacton wird durch niedermolekulare Polyole wie Ethylenglykol, 1,3-Propandiol, 1,4-Butandiol oder Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise -Caprolactam mit niedermolekularen Diolen hergestellt werden.

Beispiele für gut geeignete lineare aliphatische Polyesterdiole B) der vorstehend beschriebenen Art sind die Polycaprolactondiole, die unter der Marke CAPA® der Firma Solvay Interox vertrieben werden.

Beispiele geeigneter Triole B) sind Trimethylolethan, Trimethylolpropan oder Glycerin, insbesondere Trimethylolpropan.

Beispiele geeigneter Tetrole B) sind Pentaerythrit oder Homopentaerythrit.

Beispiele geeigneter höher funktioneller Polyole B) sind Zuckeralkohole wie Threit, Erythrit, Arabit, Adonit, Xylit, Sorbit, Mannit oder Dulcit.

All die vorstehend beschriebenen Verbindungen B) können, wie vorstehend bereits erwähnt, für die Herstellung der oligomeren und polymeren Diisocyanate A) verwendet werden.

Erfindungsgemäß ist es von Vorteil, die Verbindungen A) und die Verbindungen B) so auszuwählen, daß erfindungsgemäße Polyurethane resultieren, deren Weichphase eine Glasübergangstemperatur Tg <25°C aufweist.

Das dritte erfindungswesentliche Ausgangsprodukt für die Herstellung der erfindungsgemäßen Polyurethane ist mindestens eine olefinisch ungesättigte Verbindung C) mit einer isocyanatreaktiven funktionellen Gruppe.

Zwar können erfindungsgemäß auch aromatische Verbindungen, die mindestens eine Gruppe mit mindestens einer olefinisch ungesättigten Doppelbindung enthalten, wie beispielsweise Styrolderivate, als Verbindungen C) angewandt werden; erfindungsgemäß ist es indes von Vorteil, wenn die Verbindungen C) keine aromatischen Gruppen enthalten.

Beispiele geeigneter isocyanatreaktiver funktioneller Gruppen sind die vorstehend beschriebenen, insbesondere die Hydroxylgruppe.

Beispiele geeigneter olefinisch ungesättigter Gruppen sind (Meth)acrylat-, Vinylether-, Vinylester-, Allyl-, Allylether- und/oder Allylestergruppen, bevorzugt Methacrylat-, Acrylat- und/oder Allylgruppen, insbesondere aber Acrylatgruppen.

Die erfindungsgemäß zu verwendende Verbindung C) enthält eine olefinisch ungesättigte Doppelbindung oder zwei oder drei olefinisch ungesättigte Doppelbindungen. In speziellen Fällen kann sie auch mehr als drei olefinisch ungesättigte Doppelbindungen enthalten. Erfindungsgemäß von Vorteil ist eine olefinisch ungesättigte Doppelbindung.

Beispiele gut geeigneter erfindungsgemäß zu verwendender Verbindungen C) sind demnach übliche und bekannte Monomere, welche mindestens eine Hydroxylgruppe pro Molekül tragen, wie
- Allylalkohol;
- Hydroxyalkylester der Acrylsäure oder der Methacrylsäure, insbesondere der Acrylsäure, die durch Veresterung aliphatischer Diole, beispielsweise der vorstehend beschriebenen niedermolekularen Diole B), mit Acrylsäure oder Methacrylsäure oder durch Umsetzung von Acrylsäure oder Methacrylsäure mit einem Alkylenoxid erhältlich sind, insbesondere Hydroxyalkylester der Acrylsäure oder Methacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutyl-, Bis(hydroxymethyl)cyclohexanacrylat oder - methacrylat; oder
- Umsetzungsprodukte aus cyclischen Estern, wie z.B. epsilon-Caprolacton, und diesen Hydroxyalkyl- oder -cycloalkylestern.

Die erfindungsgemäßen Polyurethane werden vorteilhafterweise hergestellt, indem man
(1) mindestens ein Diisocyanat A) mit mindestens einer Verbindung C) im Molverhältnis A) : C) = 1 : 1 zu einem eine Isocyanatgruppe und eine olefinisch ungesättigte Gruppe enthaltenden Addukt A/C) umsetzt, wonach man
(2) das Addukt A/C) mit mindestens einer Verbindung B) in einem Molverhältnis A/C) : B) = x : 1, worin x die Anzahl der isocyanatreaktiven Gruppen in der mindestens einen Verbindung B) bedeutet, zu den erfindungsgemäßen Polyurethanen umsetzt.

Nach einer weiteren vorteilhaften Variante werden die erfindungsgemäßen Polyurethane hergestellt, indem man
(1) mindestens ein Diisocyanat A) mit mindestens einer Verbindung B) in einem Molverhältnis A) : B) = x : 1, worin x die Anzahl der isocyanatreaktiven Gruppen in der mindestens einen Verbindung B) bedeutet, zu dem Addukt A/B) mit x Isocyanatgruppen umsetzt, wonach man
(2) das Addukt A/B) mit mindestens einer Verbindung C) in einem Molverhältnis C) : A/B) = x : 1, worin x die Anzahl der Isocyanatgruppen in dem Addukt A/B) bedeutet, zu den aliphatischen Polyurethanen umsetzt.

Erfindungsgemäß ist es von Vorteil, wenn x eine Zahl, insbesondere eine ganze Zahl, von 2 bis 6, bevorzugt 2 bis 5, besonders bevorzugt 2 bis 4, ganz besonders bevorzugt 2 und 3 und insbesondere 2 ist.

Methodisch gesehen weisen die Verfahren keine Besonderheiten auf, sondern erfolgen nach den üblichen und bekannten Methoden der organischen Isocyanatchemie. Vorzugsweise werden die Umsetzungen unter Inertgas durchgeführt, wobei Temperaturen von 20 bis 120, vorzugsweise 30 bis 100, bevorzugt 40 bis 80 und insbesondere 50 bis 70°C angewandt werden. Im allgemein empfiehlt es sich, die Umsetzungen in einem organischen Lösemittel oder Lösemittelgemisch durchzuführen, das nicht isocyanatreaktiv ist. Beispiele für geeignete organische Lösemittel sind Ketone oder Ester wie Methylethylketon, Methylisobutylketon oder Ethoxyethylpropionat. Des weiteren ist es von Vorteil, übliche und bekannte Katalysatoren wie Dibutylzinndilaurat, Lithiumdecanoat oder Zinkoctoat in wirksamen Mengen zu verwenden. Das resultierende erfindungsgemäße Polyurethan kann durch Eindampfen der Lösung und/oder durch Aus- und/oder Umkristallisieren isoliert und gereinigt werden.

Das erfindungsgemäße Polyurethan kann als Pulverlack oder zur Herstellung von Pulverlacken verwendet werden.

Die erfindungsgemäßen Pulverlacke auf der Basis mindestens eines erfindungsgemäßen Polyurethans sind thermisch und/oder mit aktinischer Strahlung härtbar. Bei der Kombination von thermischer Härtung und Härtung mit aktinischer Strahlung spricht man auch von Dual Cure.

Die Zusammensetzung der erfindungsgemäßen Pulverlacke kann außerordentlich breit variiert werden, was ein ganz westlicher Vorteil ist. Hierbei richtet sich die Zusammensetzung zum einen nach der Härtungsmethode oder den Härtungsmethoden, die angewandt werden soll(en), und zum anderen nach dem Verwendungszweck der Pulverlacke (pigmentfreier Klarlack oder pigmenthaltiger farb- und/oder effektgebender Lack).

Beispiele geeigneter weiterer Bestandteile zu Verwendung in den erfindungsgemäßen Pulverlacken sind Oligomere und/oder Polymere, die thermisch und/oder mit aktinischer Strahlung härtbar sind und eine Glasübergangstemperatur Tg von über 40°C aufweisen, wie thermisch härtbare und/oder mit aktinischer Strahlung härtbare lineare und/oder verzweigte und/oder blockartig, kammartig und/oder statistisch aufgebaute Poly(meth)acrylate oder Acrylatcopolymerisate, Polyester, Alkyde, Polyurethane, acrylierte Polyurethane, acrylierte Polyester, Polylactone, Polycarbonate, Polyether, Epoxidharz-Amin-Addukte, (Meth)Acrylatdiole, partiell verseifte Polyvinylester oder Polyharnstoffe oder mit aktinischer Strahlung härtbare (meth)acrylfunktionelle (Meth)Acrylatcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate.

Beispiele besonders gut geeigneter Oligomere oder Polymere, die als weitere Bestandteile in den erfindungsgemäßen Pulverlacken verwendet werden können, sind die vernetztbaren Copolymerisate, wie sie in den europäischen Patentschriften EP-A-0 650 985, EP-A-0 650 978 oder EP-A-0 650 979 beschrieben werden.

Darüber hinaus können die erfindungsgemäßen Pulverlacke noch lackübliche Additive enthalten. Beispiele geeigneter lacküblicher Additive zur Verwendung in den erfindungsgemäßen Pulverlacken sind
- übliche und bekannte thermisch und/oder mit aktinischer Strahlung härtbare Reaktiverdünner wie stellungsisomere Diethyloctandiole oder Hydroxylgruppen enthaltende hyperverzweigte Verbindungen oder Dendrimere, di- oder höherfunktionelle (Meth)Acrylate oder (Meth)Acrylatgruppen enthaltende Polyisocyanate;
- sonstige Vernetzungsmittel wie Aminoplastharze, Anhydridgruppen enthaltende Verbindungen oder Harze, Epoxidgruppen enthaltende Verbindungen oder Harze, Tris(alkoxycarbonylamino)triazine, Carbonatgruppen enthaltende Verbindungen oder Harze, blockierte und/oder unblockierte Polyisocyanate, beta-Hydroxyalkylamide sowie Verbindungen mit im Mittel mindestens zwei zur Umesterung befähigten Gruppen, beispeilsweise Umsetzungsprodukte von Malonsäurediestern und Polyisocyanaten oder von Estern und Teilestern mehrwertiger Alkohole der Malonsäure mit Monoisocyanaten, wie sie in der europäischen Patentschrift EP-A-0 596 460 beschrieben werden;
- UV-Absorber;
- Lichtschutzmittel wie HALS-Verbindungen, Benztriazole oder Oxalanilide;
- Radikalfänger;
- thermolabile radikalische Initiatoren wie organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether;
- Katalysatoren für die Vernetzung wie Dibutylzinndilaurat, Lithiumdecanoat oder Zinkoctoat;
- Entlüftungsmittel wie Diazadicycloundecan oder Benzoin;
- Photoinitiatoren wie solche vom Norrish II-Typ, deren Wirkungsmechanismus auf einer intramolekularen Variante der Wasserstoff Abstraktionsreaktionen beruht, wie sie in vielfältiger Weise bei photochemischen Reaktionen auftreten (beispielhaft sei hier auf Römpp Chemie Lexikon, 9. erweiterte und neubearbeitete Auflage, Georg Thieme Verlag Stuttgart, Bd. 4, 1991, verwiesen) oder kationische Photoinitiatoren (beispielhaft sei hier auf Römpp Lexikon Lacke und Druckfarben, Georg Thieme Verlag Stuttgart, 1998, Seiten 444 bis 446, verwiesen), insbeondere Benzophenone, Benzoine oder Benzoinether oder Phosphinoxide;
- Slipadditive;
- Polymerisationsinhibitoren;
- Haftvermittler wie Tricyclodecandimethanol;
- Verlaufmittel;
- transparente Füllstoffe auf der Basis von Siliziumdioxid, Aluminiumoxid, Titandioxid oder Zirkoniumoxid; ergänzend wird noch auf das Römpp Lexikon Lacke und Druckfarben, Georg Thieme Verlag, Stuttgart, 1998, Seiten 250 bis 252, verwiesen;
- Flammschutzmittel;
- Mattierungsmittel wie Magnesiumstearat;
- elektrisch leitfähige Pigmente, wie Metallpigmente, Leitfahigkeitsruße, dotierte Perlglanzpigmente oder leitfähiges Bariumsulfat. Besonders gut geeignete elektrisch leitfähige Pigmente sind die Leitfähigkeitsruße; ergänzend wird auf Römpp Lexikon Lacke und Druckfarben, Georg Thieme Verlag, Stuttgart, New York, 1998, »Metallpigmente«, S. 381, und »Leitfähige Pigmente«, S. 354, verwiesen;
- Effektpigmente, wie Metallplättchenpigmente wie handelsübliche Aluminiumbronzen, gemäß DE-A-36 36 183 chromatierte Aluminiumbronzen und handelsübliche Edelstahlbronzen, sowie nichtmetallische Effektpigmente wie zum Beispiel Perlglanz-bzw. Interferenzpigmente; ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, verwiesen;
- anorganische farbgebende Pigmente wie Titandioxid, Eisenoxide, Sicotransgelb und Ruß oder organische farbgebende Pigmente wie Thioindigopigmente Indanthrenblau, Cromophthalrot, Irgazinorange und Heliogengrün; ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentvolumenkonzentration«, Seite 563 »ThioindigoPigmente« und Seite 567 »Titandioxid-Pigmente« verwiesen, oder
- organische und anorganische Füllstoffe wie Kreide, Calciumsulfate, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Holzmehl; ergänzend wird auf Römpp Lexikon Lacke und Druckfarben, Georg Thieme Verlag, 1998, Seiten 250 ff., »Füllstoffe«, verwiesen.

Weitere Beispiele geeigneter Lackadditive werden in dem Lehrbuch »Lackadditive« von Johan Bieleman, Wiley-VCH, Weinheim, New York, 1998, beschrieben.

Diese Additive werden den erfindungsgemäßen Pulverlacken in üblichen und bekannten, wirksame Mengen zugesetzt, welche je nach Additiv bei 0,001 bis 500 Gewichtsteilen pro 100 Gewichtsteilen an erfindungsgemäßem Polyurethan liegen können.

Die Herstellung der erfindungsgemäßen Pulverlacke weist keine methodischen Besonderheiten auf, sondern erfolgt in üblicher und bekannter Weise vorzugsweise durch Vermischen der Bestandteile in der Schmelze, durch Extrusion oder Kneten, Austragen der Schmelze aus dem Mischaggregat, Verfestigen der resultierenden homogenisierten Masse, Zerkleinern der Masse, bis die gewünschte Korngröße resultiert, sowie gegebenenfalls Sichten des resultierenden erfindungsgemäßen Pulverlacks unter Bedingungen, unter denen keine vorzeitige thermische Vernetzung und/oder Vernetzung mit aktinischer Strahlung und/oder sonstigen Schädigungen einzelner Bestandteile des erfindungsgemäßen Pulverlacks beispielsweise durch thermischen Abbau eintreten.

Hierbei erweist es sich als weiterer besonderer Vorteil des erfindungsgemäßen Pulverlacks, daß er in Wasser dispergiert werden kann, wodurch ein erfindungsgemäßer Pulverslurry-Lack resultiert.

Auch die Applikation des erfindungsgemäßen Pulverlacks weist keine methodischen Besonderheiten auf, sondern erfolgt mit Hilfe üblicher und bekannter Verfahren und Vorrichtungen beispielsweise durch elektrostatisches Versprühen, wobei auch hier Bedingungen angewandt werden, unter denen keine vorzeitige thermische Vernetzung und/oder Vernetzung mit aktinischer Strahlung und/oder sonstigen Schädigungen einzelner Bestandteile des erfindungsgemäßen Pulverlacks beispielsweise durch thermischen Abbau eintreten.

Der erfindungsgemäße Pulverslurry-Lack dagegen kann mit Hilfe von Verfahren und Vorrichtungen appliziert werden, wie sie üblicherweise für die Applikation von Spritzlacken angewandt werden.

Der erfindungsgemäße Pulverlack und der erfindungsgemäße Pulverslurry-Lack kann in den unterschiedlichsten Schichtdicken appliziert werden, so daß Beschichtungen der unterschiedlichsten Stärke, insbesondere von 10 bis 250µm, resultieren. Die Stärke der Beschichtungen richtet sich nach dem Verwendungszweck der Beschichtungen und kann daher vom Fachmann ohne weiteres eingestellt werden.

Auch die Härtung der applizierten Pulverlackschichten weist keine methodischen Besonderheiten auf, sondern es werden die üblichen und bekannten Verfahren und Vorrichtungen angewandt.

So kann die Härtung mit aktinischer Strahlung mit elektromagnetischer Strahlung wie Röntgenstrahlung, UV-Strahlung, sichtbares Licht oder nahes IR-Licht (NIR) oder mit Korpuskularstrahlung wie Elektronenstrahlen durchgeführt werden. Verfahren und Vorrichtungen für die Härtung mit aktinischer Strahlung sind üblich und bekannt und werden beispielsweise in R. Holmes, »U.V. and E.B. Curing Formulations for Printing Inks«, Coatings and Paints, SITA Technology, Academic Press, London, United Kindom 1984, beschrieben.

Die thermische Härtung weist ebenfalls keine methodischen Besonderheiten auf, sondern erfolgt nach den üblichen und bekannten Methoden wie Erhitzen in einem Umluftofen oder Bestrahlen mit IR-Lampen.

Als Substrate kommen alle zu lackierenden Oberflächen von Gegenständen in Betracht, die einer Härtung der hierauf befindlichen Lackschichten unter Anwendung von Hitze und/oder aktinischer Strahlung zugänglich sind, das sind z. B. Gegenstände aus Metallen, Kunststoffen, Holz, Keramik, Stein, Textil, Faserverbunden, Leder, Glas, Glasfasern, Glas- und Steinwolle oder mineral- und harzgebundene Baustoffen, wie Gips- und Zementplatten oder Dachziegel. Demnach ist der erfmdungsgemäße Pulverlack oder Pulverslurry-Lack, insbesondere als Klarlack, für Anwendungen in der Automobillackierung, der Lackierung von Möbeln und der industriellen Lackierung, inklusive Coil Coating, Container Coating und die Beschichtung elektrischer Bauteile, in hohem Maße geeignet. Im Rahmen der industriellen Lackierungen eignet er sich für die Lackierung praktisch aller Teile für den privaten oder industriellen Gebrauch wie Radiatoren, Haushaltsgeräte, Kleinteile aus Metall, Radkappen, Felgen oder Wicklungen von elektrischen Motoren.

Insbesondere ist die erfindungsgemäße Klarlackierung als Überzug von Basislacken geeignet, vorzugsweise in der Automobilindustrie. Besonders geeignet ist sie als Klarlackierung über Wasserbasislacken auf Basis von Polyestern, Polyurethanharzen und Aminoplastharzen.

Die hierbei angewandten metallischen Substrate können eine Grundierung, insbesondere eine kathodisch oder anodische abgeschiedene und thermisch gehärtete Elektrotauchlackierung aufweisen. Gegebenenfalls kann die Elektrotauchlackierung noch mit einer Steinschlagschutzgrundierung oder einem Füller beschichtet sein.

Mit dem erfindungsgemäße Pulverlack und Pulverslurry-Lack können insbesondere auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PC, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Die zu lackierenden Kunststoffe können selbstverständlich auch Polymerblends, modifizierte Kunststoffe oder faserverstärkte Kunststoffe sein. Es können auch die für die Beschichtung von üblicherweise im Fahrzeugbau, insbesondere Kraftfahrzeugbau, eingesetzten Kunststoffe zum Einsatz kommen.

Im Falle von nichtfunktionalisierten und/oder unpolaren Substratoberflächen können diese vor der Beschichtung in bekannter Weise einer Vorbehandlung mit einem Plasma oder mit Beflammen unterzogen und/oder mit einer Hydrogrundierung aus einem Hydroprimer beschichtet werden.

Die aus den erfindungsgemäßen Pulverlacken und Pulverslurry-Lacken hergestellten erfindungsgemäßen Beschichtungen weisen einen hervorragenden Verlauf und einen hervorragenden optischen Gesamteindruck auf. Sie sind witterungsstabil und vergilben auch im tropischen Klima nicht. Sie sind daher für zahlreiche Anwendungszwecke im Innen- und Außenbereich verwendbar. Daher weisen auch grundierte und ungrundierte Substrate, insbesondere Karosserien von Automobilen und Nutzfahrzeugen, industrielle Bauteile, inklusive Kunstsstoffteile, Emballagen, Coils und elektrische Bauteile, oder Möbel, die mit mindestens einer erfindungsgemäßen Beschichtung beschichtet sind, besondere technische und wirtschaftliche Vorteile, insbesondere eine lange Gebrauchsdauer auf, was sie für die Anwender besonders attraktiv macht.

### Beispiele

### Beispiele 1 bis 16

### Die Herstellung der erfindungsgemäßen Polyurethane 1 bis 16

Für die Herstellung der erfindungsgemäßen Polyurethane 1 bis 16 wurde zunächst ein Addukt aus Hexamethylendiisocyanat und Hydroxyethylacrylat (Molverhältnis 1 : 1) nach der folgenden Vorschrift hergestellt:

1680 Gewichtsteile Hexamethylendiisocyanat und 0,84 Gewichtsteile Dibutylzinndilaurat (500 ppm, bezogen auf Hexamethylendiisocyanat) wurden unter Stickstoff in einem geeigneten Reaktionsgefäß vorgelegt und auf 60°C erwärmt. Bei dieser Temperatur wurden innerhalb von 30 Minuten 116 Gewichtsteile Hydroxyethylacrylat zugetropft. Hiernach ließ man die resultierende Reaktionsmischung während 60 Minuten bei 60°C nachreagieren. Anschließend wurde die Reaktionsmischung durch Destillation am Dünnschichtverdampfer bei 165 °C (Öltemperatur) und unter einem Druck von 2,5 mbar von monomerem Hexamethylendiisocyanat befreit. Das resultierende Addukt war ein viskoses Öl, das bei Raumtemperatur langsam kristallisierte. Sein Restmonomerengehalt lag unter 0,2 Gew.-%.

Die erfindungsgemäßen Polyurethane 1 bis 16 wurden nach der folgenden allgemeinen Vorschrift hergestellt:

0,1 Mol einer Verbindung B) (vgl. Tabelle 1) wurden in 250 ml Methylethylketon gelöst. Zu der resultierenden Lösung wurden die in der Tabelle 1 aufgeführten äquimolaren Mengen des vorstehend beschriebenen Adduktes hinzugegeben. Anschließend wurden 500 ppm, bezogen auf das Addukt, an Dibutylzinndilaurat zugegeben, und die resultierende Reaktionsmischung wurde auf 60 °C erwärmt. Sie wurde noch während zwei Stunden bei dieser Temperatur gerührt, hiernach abgekühlt und während zwölf Stunden in einem Kühlschrank bei 3 °C gehalten. Der hierbei ausgefallene Feststoff wurde abgesaugt, zweimal mit jeweils 50 ml Methylethylketon gewaschen und im Vakuum getrocknet. Die Schmelzpunkte der erfindungsgemäßen Polyurethane 1 bis 16 finden sich in der Tabelle 1.

**Tabelle 1: Ausgangsprodukte und deren Molverhältnisse sowie die Schmelzintervalle oder Schmelzpunkte der erfindungsgemäßen Polyurethane**

| **Beispiel Nr.** | **Verbindung B) (°C)** | **Molverhältnis Schmelzintervall**/ **B) : Addukt A/C)** | **Schmelzpunkt** |
|---|---|---|---|
| 1 | Ethylenglykol | 1:2 | 124 |
| 2 | 1,2-Propandiol | 1 : 2 | 91 |
| 3 | 1,3-Propandiol | 1 : 2 | 118 |
| 4 | 1,3-Butandiol | 1 : 2 | 97 bis 100 |
| 5 | 1,4-Butandiol | 1 : 2 | 135 |
| 6 | 1,5-Pentandiol | 1 : 2 | 125 |
| 7 | 1,6-Hexandiol | 1 : 2 | 128 |
| 8 | CAPA® 200 | 1 : 2 | 115 |
| 9 | CAPA® 212 | 1 : 2 | 125 bis 128 |
| 10 | CAPA® 222 | 1 : 2 | 119 bis 122 |
| 11 | Ethanolamin | 1 : 2 | 128 bis 130 |
| 12 | 1,4-Cyclohexandiol | 1 : 2 | 105 bis 108 |
| 13 | Glycerin | 1 : 3 | 105 bis 107 |
| 14 | Mannit | 1 : 6 | 105 bis 108 |
| 15 | Trimethylolethan | 1 : 3 | 117 bis 118 |
| 16 | Wasser | 1 : 3 | 120 bis 125 |

| | | | |
|---|---|---|---|
| CAPA® = Polycaprolactondiole der Firma Solvay Interox | | | |

Die erfindungsgemäßen Polyurethane 1 bis 16 waren hervorragend für die Herstellung von Pulverlacken geeignet.

### Beispiele 17 bis 21

### Die Herstellung der erfindungsgemäßen Polyurethane 17 bis 21

Die erfindungsgemäßen Polyurethane 17 bis 21 wurden nach der folgenden allgemeinen Vorschrift hergestellt:

0,1 Mol mindestens einer Verbindung B) (vg1. Tabelle 2) wurden in 250 ml Methylethylketon gelöst. Zu der Lösung wurden, bezogen auf die Menge an Hexamethylendiisocyanat, 500 ppm Dibutylzinndilaurat zugegeben, wonach die resultierende Mischung auf 70°C erwärmt wurde. Anschließend wurde die in der Tabelle 2 aufgeführte äquimolare Menge an Hexamethylendiisocyanat innerhalb von 10 Minuten zugegeben, wonach die resultierende Reaktionsmischung während einer Stunde bei 70°C gerührt wurde. Hiernach wurde während zehn Minuten die in der Tabelle 2 angegebene äquimolare Menge Hydroxyethylacrylat zugegeben. Die resultierende Reaktionsmischung wurde nochmals während einer Stunde bei 70°C gerührt, wonach man sie abkühlen ließ und sie während zwölf Stunden in einem Kühlschrank bei 3°C hielt. Der hierbei ausgefallene Feststoff wurde abgesaugt, zweimal mit jeweils 50 ml Methylethylketon gewaschen und im Vakuum getrocknet. Die Tabelle 2 gibt einen Überblick über die Ausgangsprodukte, deren Molverhältnisse und die Schmelzintervalle bzw. Schmelzpunkte.

**Tabelle 2: Ausgangsprodukte und deren Molverhältnisse sowie die Schmelzintervalle oder Schmelzpunkte der erfindungsgemäßen Polyurethane**

| **Beispiel Nr.** | **Verbindungen B)** | **Molverhältnis B) : C) : A)** | **Schmelzintervall/ Schmelzpunkt (°C)** |
|---|---|---|---|
| 17 | 1,4-Butandiol | 1 : 2 : 2 | 161 |
| 18 | CAPA® 222 | 1 : 2 : 2 | 120 bis 122 |
| 19 | CAPA® 212 Ethylenglykol | (0,2 : 0,8) : 2 : 2 | 102 |
| 20 | Ethylenglykol | 1 : 0,5 : 1,5 | 145 bis 150 |
| 21 | 1,4-Cyclohexandiol | 1:2:2 | 180 bis 185 |

| | | | |
|---|---|---|---|
| A) = Hexamethylendiisocyanat; | | | |
| C) = Hydroxyethylacrylat; | | | |
| CAPA® = Polycaprolactondiole der Firma Solvay Interox; | | | |

Die erfindungsgemäßen Polyurethane 17 bis 21 waren hervorragend für die Herstellung von Pulverlacken geeignet.

## Patentansprüche

1. Polymerisierbares olefinisch ungesättigte Doppelbindungen enthaltendes festes aliphatisches Polyurethan mit einem Schmelzintervall von 0,5 bis 10°C im Temperaturbereich von 40 bis 200°C, herstellbar indem man
(a1) mindestens ein Diisocyanat A) mit mindestens einer Verbindung C) im Molverhältnis A) : C) = 1 : 1 zu einem eine Isocyanatgruppe und eine olefinisch ungesättigte Gruppe enthaltenden Addukt A/C) umsetzt, wonach man
(a2) das Adduktes A/C) mit mindestens einer Verbindung B) in einem Molverhältnis A/C) : B) = x : 1, worin x die Anzahl der isocyanatreaktiven Gruppen in der mindestens einen Verbindung B) bedeutet, zu dem aliphatischen Polyurethan umsetzt,
oder
indem man
(b1) mindestens ein Diisocyanat A) mit mindestens einer Verbindung B) in einem Molverhältnis A) : B) = x : 1, worin x die Anzahl der isocyanatreaktiven Gruppen in der mindestens einen Verbindung B) bedeutet, zu dem Addukt A/B) mit x Isocyanatgruppen umsetzt, wonach man
(b2) das Addukt A/B) mit mindestens einer Verbindung C) in einem Molverhältnis C) : A/B) = x : 1, worin x die Anzahl der Isocyanatgruppen in dem Addukt A/B) bedeutet, zu dem aliphatischen Polyurethan umsetzt.

2. Das aliphatische Polyurethan nach Anspruch 1, **dadurch gekennzeichnet, daß** es einen Schmelzintervall von 1 bis 6°C, aufweist.

3. Das aliphatische Polyurethan nach Anspruch 1 oder 2, **dadurch gekennzeichnet, daß** es einen scharfen Schmelzpunkt aufweist.

4. Das aliphatische Polyurethan nach einem der Ansprüche 1 bis 3, **dadurch gekennzeichnet, daß** es ein sehr enges Schmelzintervall oder einen scharfen Schmelzpunkt im Temperaturbereich von 60 bis 185°C aufweist.

5. Das aliphatische Polyurethan nach einem der Ansprüche 1 bis 4, **dadurch gekennzeichnet, daß** es terminale und/oder laterale, insbesondere terminale, olefinisch ungesättigte Doppelbindungen enthält.

6. Das aliphatische Polyurethan nach Anspruch 5, **dadurch gekennzeichnet, daß** die olefinisch ungesättigten Doppelbindungen in (Meth)acrylat-, Vinylether-, Vinylester-, Allyl-, Allylether- und/oder Allylestergruppen, bevorzugt Methacrylat- und/oder Acrylatgruppen, insbesondere Acrylatgruppen, enthalten sind.

7. Das aliphatische Polyurethan nach einem der Ansprüche 1 bis 6, **dadurch gekennzeichnet, daß** das lineare aliphatische Diisocyanat A) ein monomeres Diisocyanat und/oder eine oligomeres oder polymeres Diisocyanat, herstellbar aus
A) mindestens einem linearen aliphatischen Diisocyanat und
B) mindestens einer aliphatischen Verbindung mit mindestens zwei isocyanatreaktiven funktionellen Gruppen,
darstellt.

8. Das aliphatische Polyurethan nach einem der Ansprüche 1 bis 7, **dadurch gekennzeichnet, daß** es sich bei den isocyanatreaktiven funktionellen Gruppen um Aminogruppen, Thiolgruppen und/oder Hydroxylgruppen, bevorzugt Aminogruppen und/oder Hydroxylgruppen, insbesondere Hydroxylgruppen, handelt.

9. Das aliphatische Polyurethan nach Anspruch 8, **dadurch gekennzeichnet, daß** die aliphatische Verbindung B) linear ist.

10. Das aliphatische Polyurethan nach Anspruch 9, daß die lineare aliphatische Verbindung B) ein Diamin, Triamin, Aminoalkohol mit mindestens einer Aminogruppe und mindestens einer Hydroxylgruppe, Diol, Triol, Tetrol und/oder Zuckeralkohol ist.

11. Das aliphatische Polyurethan nach Anspruch 10, **dadurch gekennzeichnet, daß** man als lineare aliphatische Verbindung B) ein niedermolekulares Diol, Triol oder ein Tetrol oder einen Zuckeralkohol mit einem Molekulargewicht von 62 bis 200 Dalton und/oder ein lineares aliphatisches oligomeres und/oder polymeres Polyesterdiol und/oder Polyetherdiol verwendet.

12. Das aliphatische Polyurethan nach Anspruch 1, **dadurch gekennzeichnet, daß** x eine Zahl, insbesondere eine ganze Zahl, von 2 bis 6 bedeutet.

13. Das aliphatische Polyurethan - nach einem der Ansprüche 1 bis 12, **dadurch gekennzeichnet, daß** seine Weichphase eine Glasübergangstemperatur Tg <25°C hat.

14. Verwendung des aliphatischen Polyurethans gemäß einem der Ansprüche 1 bis 13 als Pulverlack oder zur Herstellung von Pulverlacken.

15. Thermisch und/oder mit aktinischer Strahlung härtbarer Pulverlack, der mindestens ein aliphatisches Polyurethan gemäß einem der Ansprüche 1 bis 13 enthält oder hieraus besteht.

16. Der Pulverlack nach Anspruch 15, **dadurch gekennzeichnet, daß** er noch Oligomere und/oder Polymere enthält, die thermisch und/oder mit aktinischer Strahlung härtbar sind und eine Glasübergangstemperatur Tg von über 40°C aufweisen.

17. Der Pulverlack nach Anspruch 15 oder 16, **dadurch gekennzeichnet, daß** er noch lackübliche Additive enthält.

18. Der Pulverlack nach einem der Ansprüche 15 bis 17, **dadurch gekennzeichnet, daß** er als Pulverslurry-Lack vorliegt.

19. Beschichtung, herstellbar aus einem Pulverlack gemäß einem der Ansprüche 15 bis 18.

20. Grundierte und ungrundierte Substrate, insbesondere Karosserien von. Automobilen und Nutzfahrzeugen, industrielle Bauteile, inklusive Kunstsstoffteile, Emballagen, Coils und elektrische Bauteile, oder Möbel, enthaltend mindestens eine Beschichtung gemäß Anspruch 19.

## Claims

1. A polymerizable solid aliphatic polyurethane comprising olefinically unsaturated double bonds, having a melting range of from 0.5 to 10°C within the temperature range from 40 to 200°C, which is preparable by
(a1) reacting at least one diisocyanate A) with at least one compound C) in a molar ratio A) : C) of 1 : 1 to give an adduct A/C) containing one isocyanate group and one olefinically unsaturated group, and then
(a2) reacting the adduct A/C) with at least one compound B) in a molar ratio A/C) : B) of x : 1, wherein x is the number of the isocyanate-reactive groups in the at least one compound B), to give the aliphatic polyurethanes.
or
(b1) reacting at least one diisocyanate A) with at least one compound B) in a molar ratio A) : B) of x : 1, wherein x is the number of the isocyanate-reactive groups in the at least one compound B) to give the adduct A/B) containing x isocyanate groups, and then
(b2) reacting the adduct A/B) with at least one compound C) in a molar ratio C) : A/B) of x : 1, wherein x is the number of the isocyanate groups in the adduct A/B) to give the aliphatic polyurethane.

2. The aliphatic polyurethane according to claim 1, which has a melting range from 1 to 6°C.

3. The aliphatic polyurethane according to claim 1 or 2, which has a sharp melting point.

4. The aliphatic polyurethane according to one of claims 1 to 3, which has a very narrow melting range or a sharp melting point in the temperature range from 60 to 185°C.

5. The aliphatic polyurethane according to one of claims 1 to 4, which comprises terminal and/or lateral, especially terminal, olefinically unsaturated double bonds.

6. The aliphatic polyurethane according to claim 5, wherein the olefinically unsaturated double bonds are present in (meth)acrylate, vinyl ether, vinyl ester, allyl, allyl ether and/or allyl ester groups, preferably methacrylate and/or acrylate groups, especially acrylate groups.

7. The aliphatic polyurethane according to one of claims 1 to 6, wherein the linear aliphatic diisocyanate A) represents a monomeric diisocyanate and/or an oligomeric or polymeric diisocyanate preparable from
A) at least one linear aliphatic diisocyanate and
B) at least one aliphatic compound containing at least two isocyanate-reactive functional groups.

8. The aliphatic polyurethane according to one of claims 1 to 7, wherein the isocyanate-reactive functional groups are amino groups, thiol groups and/or hydroxyl groups, preferably amino groups and/or hydroxyl groups, particularly hydroxyl groups.

9. The aliphatic polyurethane according to claim 8, wherein the aliphatic compound B) is linear.

10. The aliphatic polyurethane according to claim 9, that the linear aliphatic compound B) is a diamine, triamine, amino alcohol containing at least one amino group and at least one hydroxyl group, diol, triol, tetrol and/or sugar alcohol.

11. The aliphatic polyurethane according to claim 10, wherein a low molecular weight diol, triol or a tetrol or a sugar alcohol having a molecular weight of from 62 to 200 daltons and/or a linear aliphatic oligomeric and/or polymeric polyesterdiol and/or polyetherdiol is used as linear aliphatic compound B).

12. The aliphatic polyurethane according to claim 1, wherein x is a number, in particular a whole number, from 2 to 6.

13. The aliphatic polyurethane according to one of claims 1 to 12, **characterized in that** its soft phase has a glass transition temperature Tg <25°C.

14. Use of the aliphatic polyurethane according to one of claims 1 to 13 as powder coating material or for preparing powder coating materials.

15. A powder coating material curable thermally and/or with actinic radiation which comprises or consists of at least one aliphatic polyurethane according to one of claims 1 to 13.

16. The powder coating material according to claim 15, which further comprises oligomers and/or polymers which are curable thermally and/or with actinic radiation and have a glass transition temperature Tg of more than 40°C.

17. The powder coating material according to claim 15 or 16, which further comprises customary coatings additives.

18. The powder coating material according to one of claims 15 to 17, which is in the form of a powder slurry coating material.

19. A coating producible from a powder coating material according to one of claims 15 to 18.

20. Primed and unprimed substrates, especially bodies of automobiles and commercial vehicles, industrial components, including plastics parts, packaging, coils, and electrical components, or furniture, comprising at least one coating according to claim 19.

## Revendications

1. Polyuréthane aliphatique solide contenant des doubles liaisons oléfiniquement insaturées, polymérisable, présentant un intervalle de fusion de 0,5 à 10°C dans la plage de température de 40 à 200°C, pouvant être préparé en ce qu'on
(a1) transforme au moins un diisocyanate A) avec au moins un composé C) dans un rapport molaire A) : C) = 1 : 1 en un produit d'addition A/C) contenant un groupe isocyanate et un groupe oléfiniquement insaturé, puis on
(a2) transforme le produit d'addition A/C) avec au moins un composé B) dans un rapport molaire A/C) : B) = x : 1, dans lequel x signifie le nombre de groupes réactifs avec isocyanate dans ledit au moins un composé B), en polyuréthane aliphatique,
ou
en ce qu'on
(b1) transforme au moins un diisocyanate A) avec au moins un composé B) dans un rapport molaire A) : B) = x : 1, dans lequel x signifie le nombre de groupes réactifs avec isocyanate dans ledit au moins un composé B) en produit d'addition A/B) avec x groupes isocyanate, puis on
(b2) transforme le produit d'addition A/B) avec au moins un composé C) dans un rapport molaire C) : A/B) = x : 1, dans lequel x signifie le nombre de groupes isocyanate dans le produit d'addition A/B), en polyuréthane aliphatique.

2. Polyuréthane aliphatique selon la revendication 1, **caractérisé en ce qu'**il présente un intervalle de fusion de 1 à 6°C.

3. Polyuréthane aliphatique selon la revendication 1 ou 2, **caractérisé en ce qu'**il présente un point de fusion net.

4. Polyuréthane aliphatique selon l'une quelconque des revendications 1 à 3, **caractérisé en ce qu'**il présente un intervalle de fusion très étroit ou un point de fusion net dans la plage de température de 60 à 185°C.

5. Polyuréthane aliphatique selon l'une quelconque des revendications 1 à 4, **caractérisé en ce qu'**il contient des doubles liaisons oléfiniquement insaturées terminales et/ou latérales, en particulier terminales.

6. Polyuréthane aliphatique selon la revendication 5, **caractérisé en ce que** les doubles liaisons oléfiniquement insaturées sont contenues dans des groupes (méth)acrylate, vinyléther, ester de vinyle, allyle, allyléther et/ou ester d'allyle, de préférence des groupes méthacrylate et/ou acrylate, en particulier des groupes acrylate.

7. Polyuréthane aliphatique selon l'une quelconque des revendications 1 à 6, **caractérisé en ce que** le diisocyanate aliphatique linéaire A) est un diisocyanate monomère et/ou un diisocyanate oligomère ou polymère, pouvant être préparé à partir
A) d'au moins un diisocyanate aliphatique linéaire et
B) d'au moins un composé aliphatique comprenant au moins deux groupes fonctionnels réactifs avec isocyanate.

8. Polyuréthane aliphatique selon l'une quelconque des revendications 1 à 7, **caractérisé en ce qu'**il s'agit, pour les groupes fonctionnels réactifs avec isocyanate de groupes amino, thiol et/ou hydroxyle, de préférence de groupes amino et/ou hydroxyle, en particulier de groupes hydroxyle.

9. Polyuréthane aliphatique selon la revendication 8, **caractérisé en ce que** le composé aliphatique B) est linéaire.

10. Polyuréthane aliphatique selon la revendication 9, **caractérisé en ce que** le composé aliphatique linéaire B) est une diamine, une triamine, un aminoalcool comprenant au moins un groupe amino et au moins un groupe hydroxyle, un diol, un triol, un tétrol et/ou un alcool de sucre.

11. Polyuréthane aliphatique selon la revendication 10, **caractérisé en ce qu'**on utilise comme composé aliphatique linéaire B) un diol, un triol ou un tétrol de bas poids moléculaire ou un alcool de sucre présentant un poids moléculaire de 62 à 200 Daltons et/ou un polyesterdiol et/ou un polyétherdiol linéaire aliphatique oligomère et/ou polymère.

12. Polyuréthane aliphatique selon la revendication 1, **caractérisé en ce que** x signifie un nombre, en particulier un nombre entier de 2 à 6.

13. Polyuréthane aliphatique selon l'une quelconque des revendications 1 à 12, **caractérisé en ce que** sa phase molle présente une température de transition vitreuse Tg <25°C.

14. Utilisation du polyuréthane aliphatique selon l'une quelconque des revendications 1 à 13 comme laque en poudre ou pour la préparation de laques en poudre.

15. Laque en poudre thermodurcissable et/ou durcissable par un rayonnement actinique, qui contient ou qui est constituée par au moins un polyuréthane aliphatique selon l'une quelconque des revendications 1 à 13.

16. Laque en poudre selon la revendication 15, **caractérisée en ce qu'**elle contient encore des oligomères et/ou des polymères, qui sont thermodurcissables et/ou durcissables par un rayonnement actinique et qui présentent une température de transition vitreuse Tg supérieure à 40°C.

17. Laque en poudre selon la revendication 15 ou 16, **caractérisée en ce qu'**elle contient encore des additifs usuels pour les laques.

18. Laque en poudre selon l'une quelconque des revendications 15 à 17, **caractérisée en ce qu'**elle se trouve sous forme de laque en poudre en suspension.

19. Revêtement pouvant être préparé à partir d'une laque en poudre selon l'une quelconque des revendications 15 à 18.

20. Substrats apprêtés et non apprêtés, en particulier carrosseries de voitures et de véhicules utilitaires, pièces industrielles, y compris des pièces en matériau synthétique, des emballages, des bobines et des pièces électriques, ou meubles contenant au moins un revêtement selon la revendication 19.
